# FASCICULE DE BREVET EUROPEEN

(11) **EP 0 728 718 B1**
(45) Date de publication et mention de la délivrance du brevet: **28.08.2002**
(21) Numéro de dépôt: 96400356.0
(22) Date de dépôt: 21.02.1996
(51) Int. Cl.: C05F 17/02, A01C 3/00

(54) **Machine à retourner les andains à convoyeur oblique**
Umsetzmaschine, mit quer Förderband, für Kompostierungsmieten
Compost windrow turner with oblic conveyor belt

(30) Priorité: 21.02.1995 FR 9501996
(43) Date de publication de la demande: 28.08.1996
(73) Titulaire: JEANTIL S.A., F-35590 l'Hermitage (FR)
(72) Inventeur: Jeantil, Philippe, 35310 Mordelles (FR)
(74) Mandataire: Jacobson, Claude

(56) Documents cités:
- WO-A-90/13527
- AU-A- 1 544 670
- US-A- 4 475 450

## Description

La présente invention concerne la technique de l'aération de fumier en vue d'obtenir du compost et elle se rapporte plus particulièrement aux dispositifs retourneurs d'andains de fumier selon le préambule de la revendication 1.

Le retournement du fumier à l'aide d'un dispositif du type précité assure le broyage du fumier tout en provoquant son aération.

La technique du retournement s'applique également aux déchets forestiers.

L'aération du fumier provoque l'évaporation de l'eau qu'il contient ce qui le rend moins dense et facilite son transport.

Le volume de produit à transporter est ainsi réduit de l'ordre de 30%.

En outre l'aération du fumier favorise la destruction des graines de mauvaises herbes.

Pour faciliter les opérations d'aération on forme des andains de fumiers et après un certain temps de stockage on procède à l'aération du fumier à l'aide d'une machine de retournement.

Parmi les machines connues on peut citer les machines à vis d'archimède, éventuellement équipées d'un convoyeur sans fin de reprise des produits prélevé par la vis d'archimède et de transfert de ce produit vers un tas de stockage.

Ces machines qui sont généralement automotrices sont des machines spécialisées pourvues d'un mécanisme complet d'entraînement incorporé et sont de ce fait d'un prix de revient très élevé compte tenu de leur taux d'utilisation relativement faible dans l'année.

Il existe également des machines à vis d'archimède entraînées par un tracteur ou tractées qui présentent l'inconvénient d'avoir une vitesse de déplacement qui ne peut être inférieure à la vitesse la plus faible du tracteur et qui est trop importante pour permettre un travail de retournement satisfaisant.

WO-A-90 13 527 décrit une machine à retourner les andains qui comporte un seul convoyeur oblique muni de doigts de prélèvement et d'entraînement de la matière de l'andain, ledit convoyeur étant incliné vers le bas dans la direction de déplacement de travail de la machine et des moyens de contrôle de la matière aérée et mélangée lorsqu'elle est déchargée à l'extrémité supérieure du convoyeur, formés par des volets d'évacuation supportés par un bâti.

US-A-4 475 450 décrit une machine à compost comprenant montés sur un châssis pourvu de roues, un tambour pourvu de dents de prélèvement de la matière à l'avant de la machine et des convoyeurs à bande de transfert de la matière prélevée par le tambour, vers l'arrière de la machine.

AU-A-1 544 670 décrit un machine à retourner le compost comprenant un convoyeur à bande incliné vers l'avant de la machine et un rouleau pourvu de dents disposé en arrière et au-dessous de l'extrémité supérieure du convoyeur.

L'invention vise à remédier aux inconvénients des machines connues en créant une machine de retournement qui tout en étant d'un prix de revient raisonnable soit capable de fonctionner avec des vitesses de déplacement compatibles avec l'obtention d'une aération complète du fumier qu'elle retourne.

Elle a donc pour objet une machine à retourner les andains, notamment de fumier, comprenant un bâti pourvu de roues ou de chenilles sur lequel sont montés des moyens de prélèvement de la matière de l'andain et de transfert de cette matière de l'avant vers l'arrière de la machine disposés transversalement à la direction de déplacement de travail de la machine, les moyens de prélèvement et de transfert comprenant un convoyeur oblique pourvu d'au moins un élément sans fin muni de doigts de prélèvement et d'entraînement de la matière de l'andain, ledit convoyeur étant incliné vers le bas dans la direction de déplacement de travail de la machine et la machine comportant en outre des moyens d'actionnement dudit au moins un convoyeur oblique, caractérisée en ce qu'elle comporte en outre des moyens supplémentaires de prélèvement et de transfert de la matière de l'andain disposés au-dessus dudit convoyeur oblique.

Suivant d'autres caractéristiques de l'invention :
- les moyens supplémentaires de prélèvement et de transfert de la matière de l'andain comportent dans le bâti, un convoyeur oblique superposé au convoyeur oblique ;
- les moyens supplémentaires de prélèvement et de transfert de la matière de l'andain comportent une vis démêleuse disposée dans le bâti au-dessus du convoyeur oblique.

L'invention sera mieux comprise à la lecture de la description qui va suivre, donnée uniquement à titre d'exemple et faite en se référant aux dessins annexés, sur lesquels :
- la Fig.1 est une vue schématique de dessus d'une machine à retourner les andains de type connu représentée en position de travail ;
- la Fig.2 est une vue schématique en élévation de la machine de la figure 1 ;
- la Fig.3 est une vue schématique en élévation d'un premier mode de réalisation de la machine suivant l'invention ; et
- la Fig.4 est une vue schématique en élévation d'un second mode de réalisation de la machine suivant l'invention.

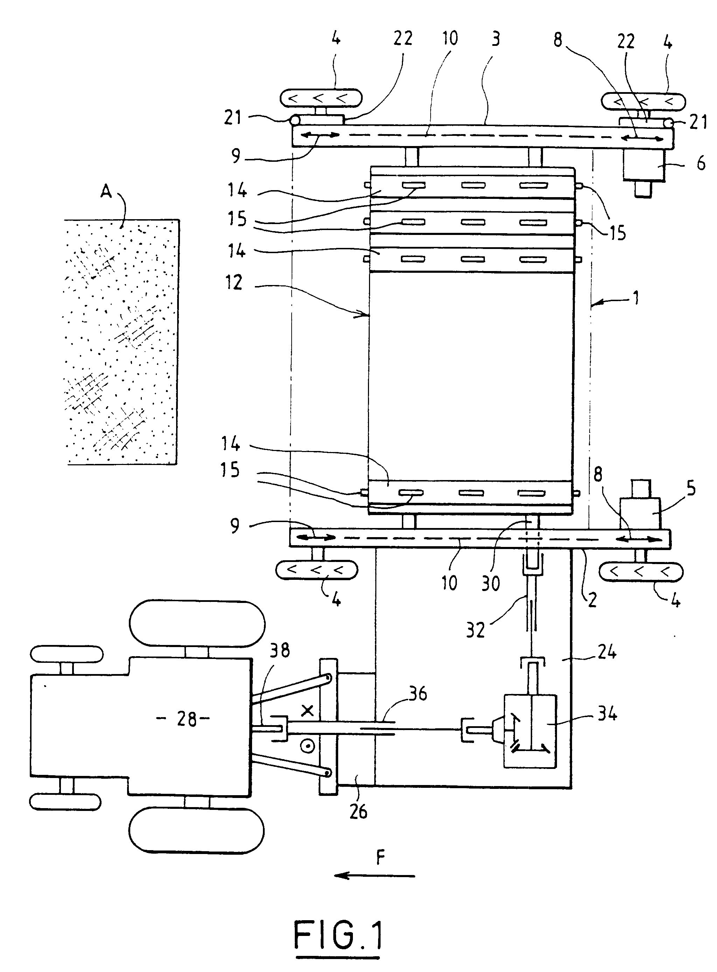

La machine à retourner les andains tels que l'andain A représentée à la figure 1 comporte un bâti 1 en forme de portique dont les montants 2 et 3 portent des roues 4 motrices de la machine.

Les montants 2 et 3 portent chacun un moto-réducteur hydraulique 5,6 d'entraînement des roues de droite et de gauche de la machine.

Les moto-réducteurs hydrauliques assurent l'entraînement des roues avant et arrière par l'intermédiaire d'ensembles de pignons 8,9 et de chaîne 10 associés respectivement aux roues de gauche et aux roues de droite.

Dans le portique ainsi constitué est monté un convoyeur oblique 12 du type comportant des chaînes 14 qui forment des éléments d'entraînement sans fin de doigts 15 de démêlage et d'entraînement des brins de paille et des matières contenus dans le fumier.

Le convoyeur oblique est par exemple du type décrit dans le brevet français n° 93 15 977 appartenant à la demanderesse, incliné vers le bas dans la direction de déplacement de travail de la machine indiquée par la flèche F sur la figure 1.

Dans leur position de travail représentée à la figure 1 les roues 4 de la machine sont disposées parallèlement aux montants 2 et 3 du bâti en forme de portique de façon à permettre à la machine de travailler dans une position telle que son côté le plus long correspondant à l'ouverture du portique se trouve face à l'andain à retourner. Les roues de droite sont montées aux extrémités inférieures des montants par l'intermédiaire de supports articulés 20, en forme de charnières, dont l'axe 21 est fixé à l'extrémité correspondante du montant et dont la branche 22 portant la roue est appliquée contre le montant et présente entre la roue 4 et son pignon 8,9 d'entraînement des moyens d'accouplement appropriés (non représentés).

Grâce à cet agencement, les roues 4 de droite peuvent également occuper une position perpendiculaire aux montants 2 et 3 pour permettre de placer la machine en position de transport en vue de la tirer par son côté le plus étroit.

En revanche, les roues de gauche de la machine sont montées fixes sur le montant 2 correspondant. Elles sont donc en permanence orientées dans la direction de travail de la machine de sorte que pour assurer son transport d'un lieu de travail à un autre, on procède à son soulèvement du côté des roues de gauche pour ne la faire rouler que sur les roues de droite.

La machine représentée à la figure 1 comporte en outre un dispositif d'attelage 24 qui s'étend latéralement à partir du côté gauche de la machine si l'on considère son sens de déplacement de travail. Ce dispositif d'attelage coopère avec un dispositif d'attelage complémentaire 26 porté par un tracteur 28 qui est relié à la machine aussi bien lorsqu'elle est en position de travail que lorsqu'elle est en position de transport.

Le tracteur 28 constitue d'une part une source d'énergie hydraulique pour les moto-réducteurs 5,6 d'entraînement des roues 4 de la machine afin de la faire avancer à une vitesse de travail appropriée au retournement d'andains et qui est de l'ordre de 80 m à 1,5 km par heure et d'autre part une source d'énergie mécanique d'entraînement du convoyeur oblique à dents 12.

A cet effet l'un 30 des arbres du convoyeur 12 est relié par une transmission à cardans 32 à l'arbre de sortie d'un renvoi d'angle 34 monté sur le dispositif d'attelage 24 de la machine.

Ce renvoi d'angle peut par exemple être du type à deux boîtiers superposés contenant l'un l'arbre d'entrée et l'autre l'arbre de sortie du renvoi d'angle reliés par un arbre intermédiaire vertical autour duquel les boîtiers sont orientables angulairement l'un par rapport à l'autre.

L'utilisation d'un renvoi d'angle à deux boîtiers superposés de ce type permet de modifier à volonté la direction de déplacement du tracteur par rapport à la machine sans avoir à démonter les moyens de transmission entre la prise de force 38 et le convoyeur oblique 12.

L'arbre d'entrée du renvoi d'angle 34 est relié par une transmission à cardans 36 à la prise de force 38 du tracteur 28.

Dans l'agencement de la figure 1, on voit que le tracteur 28 étant lié à la machine pendant son fonctionnement, il est poussé par celle-ci par l'intermédiaire des dispositifs d'attelage 24,26 formant moyens de poussée, pendant le retournement d'andain, à une vitesse déterminée par les moyens de commande des moteurs hydrauliques 5 et 6 (non représentés).

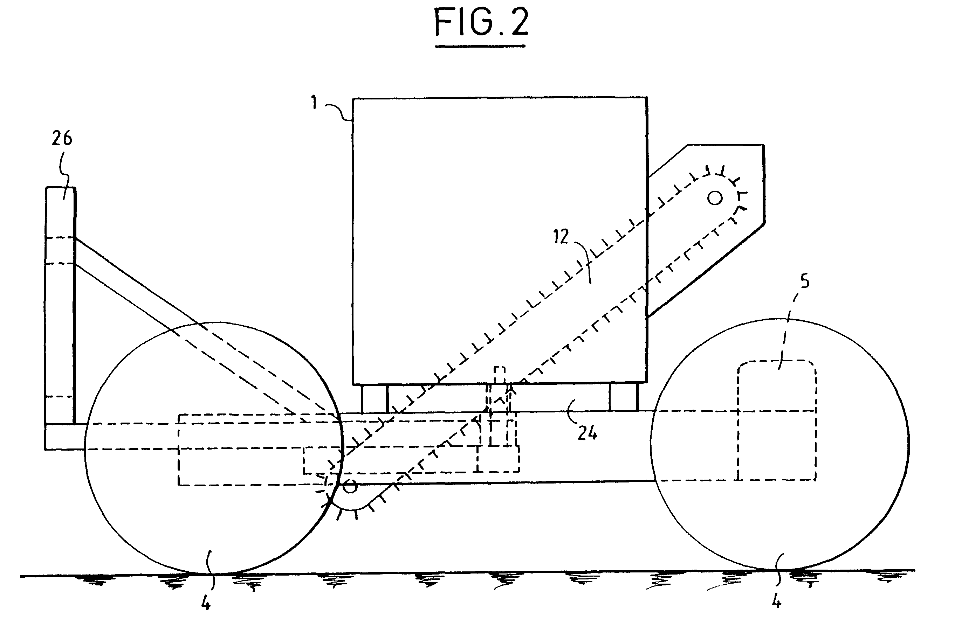

En se référant maintenant à la figure 2, on voit la disposition du convoyeur oblique à dents 12 dans le bâti 1 ainsi que la position relative du dispositif d'attelage 24 de la machine et du dispositif d'attelage 26 associé au tracteur lorsque la machine est en position de travail.

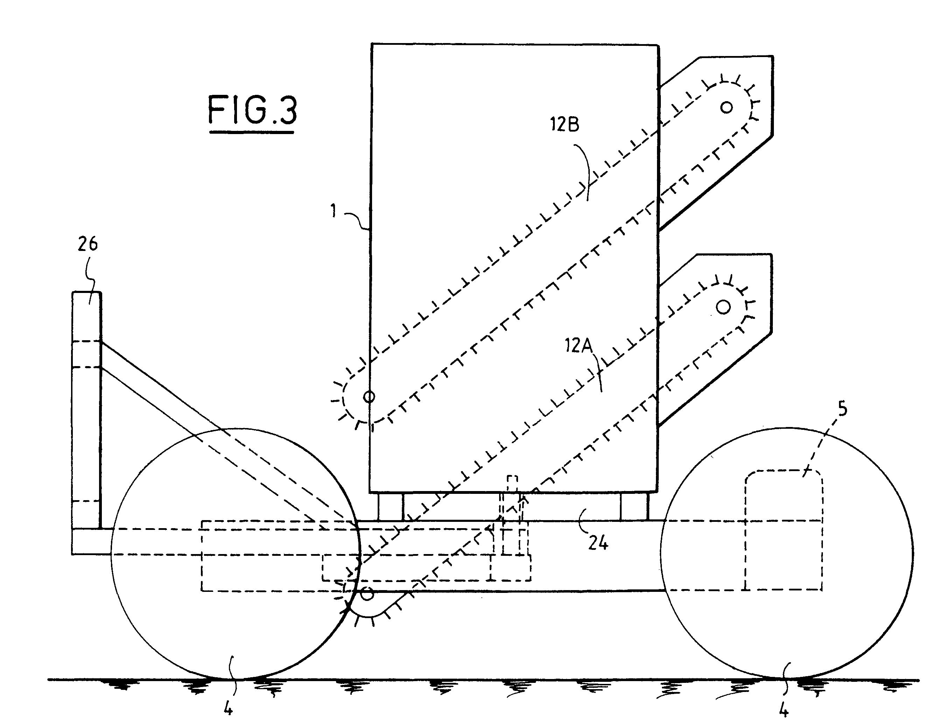

La machine représentée schématiquement à la figure 3, est de construction semblable à celle de la figure 2 à l'exception du fait qu'elle comporte dans le bâti 1, deux convoyeurs obliques 12A, 12B superposés, analogues au convoyeur 12 de la machine de la Fig.2.

Ces convoyeurs peuvent être entraînés par les mêmes moyens d'entraînement que les moyens assurant l'entraînement du convoyeur 12 de la machine décrite en référence aux figures 1 et 2, moyennant la réalisation d'une liaison mécanique appropriée entre les deux convoyeurs 12A et 12B.

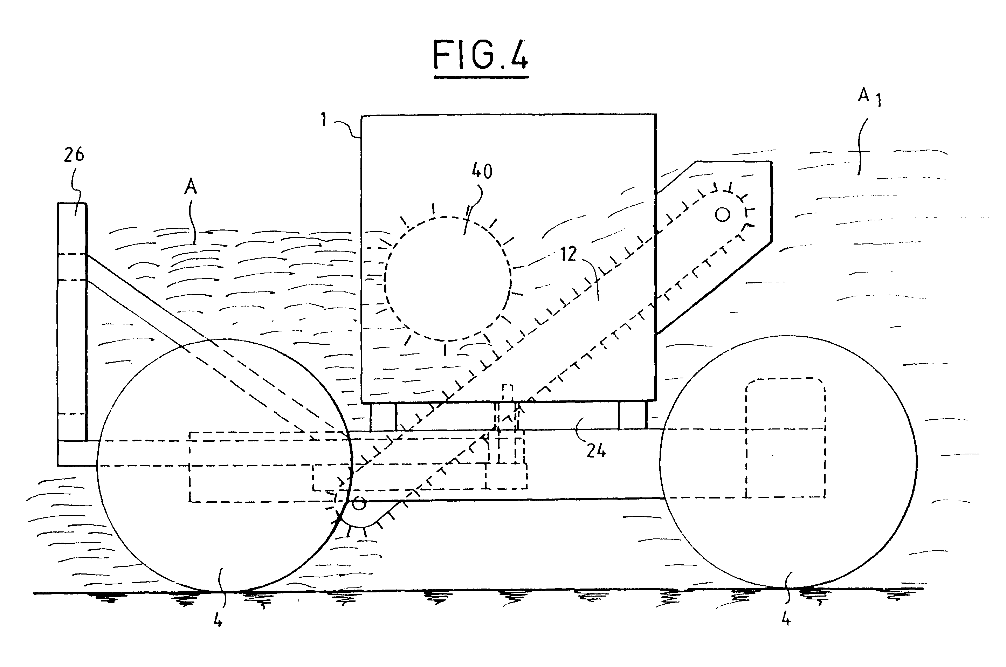

La machine à retourner les andains de fumier représentés à la figure 4, différe de celle décrite en référence aux figures 1 et 2 en ce qu'en plus du convoyeur oblique 12, elle comporte une vis démêleuse 40 montée dans le bâti 1 au-dessus du convoyeur 12, et qui facilite l'opération de démêlage des brins de paille contenus dans le fumier de l'andain et leur acheminement ultérieur vers l'arrière de la machine essentiellement par le convoyeur à dents 12 qui assure quant à lui simultanément les fonctions de démêlage et de transfert des brins et des matières arrachés à l'andain à retourner.

Sur la figure 4, on montre également la manière dont la machine à retourner les andains suivant l'invention attaque un andain de fumier A, dense à brins longs, serrés, et constitue à l'arrière de la machine un andain A1 de volume accru en raison de l'adjonction d'air aux brins déplacés par la vis 40 et le convoyeur à dents 12.

En outre, en raison de la longueur du convoyeur oblique sans fin 12, le produit déplacé n'a pas tendance à être repris par la machine.

Grâce aux agencements qui viennent d'être décrits, on obtient une machine à retourner les andains, qui tout en présentant une construction relativement simple a une grande efficacité d'aération du produit de l'andain retourné sans que le produit retourné n'ait tendance à revenir se mélanger avec le produit de l'andain initial.

Bien que dans les exemples décrits plus haut, la machine soit munie de roues, il est également possible de la munir de chenilles.

## Revendications

1. Machine à retourner les andains, notamment de fumier, comprenant un bâti (1) pourvu de roues (4) ou de chenilles sur lequel sont montés des moyens de prélèvement de la matière de l'andain et de transfert de cette matière de l'avant vers l'arrière de la machine disposés transversalement à la direction de déplacement de travail de la machine, les moyens de prélèvement et de transfert comprenant un convoyeur oblique (12 ;12a) pourvu d'au moins un élément sans fin (14) muni de doigts (15) de prélèvement et d'entraînement de la matière de l'andain, ledit convoyeur étant incliné vers le bas dans la direction de déplacement de travail de la machine et la machine comportant en outre des moyens (30,32,34,36) d'actionnement dudit au moins un convoyeur oblique, **caractérisée en ce qu'**elle comporte en outre des moyens supplémentaires (12b ;40) de prélèvement et de transfert de la matière de l'andain disposés au-dessus dudit convoyeur oblique (12 ;12a).

2. Machine à retourner les andains suivant la revendication 1, **caractérisée en ce que** les moyens supplémentaires de prélèvement et de transfert de la matière de l'andain comportent dans le bâti (1), un convoyeur oblique (12b) superposé au convoyeur oblique (12a).

3. Machine à retourner les andains suivant la revendication 1, **caractérisée en ce que** les moyens supplémentaires de prélèvement et de transfert de la matière de l'andain comportent une vis démêleuse (40) disposée dans le bâti au-dessus du convoyeur oblique (12).

## Patentansprüche

1. Maschine zum Wenden von Schwaden, insbesondere von Dung, die einen Rahmen (1) umfaßt, der mit Rädern (4) oder Gleisketten versehen ist und an dem Mittel zum Aufnehmen des Schwadenmaterials und zum Transportieren dieses Materials von der Vorderseite zur Rückseite der Maschine angebracht sind, die quer zur Arbeitsbewegungsrichtung der Maschine angeordnet sind, wobei die Aufnahme- und Transportmittel eine geneigte Fördereinrichtung (12; 12a) umfassen, die mit wenigstens einem Endloselement (14) versehen ist, das Finger (15) zum Aufnehmen und Mitnehmen des Schwadenmatcrials aufweist, wobei die Fördereinrichtung in Arbeitsbewegungsrichtung der Maschine nach unten geneigt ist und wobei die Maschine außerdem Mittel (30, 32, 34, 36) für die Betätigung der wenigstens einen geneigten Fördereinrichtung umfaßt, **dadurch gekennzeichnet, daß** sie außerdem zusätzliche Mittel (12b; 40) zum Aufnehmen und Transportieren des Schwadenmaterials umfaßt, die über der geneigten Fördereinrichtung (12; 12a) angeordnet sind.

2. Maschine zum Wenden von Schwaden nach Anspruch 1, **dadurch gekennzeichnet, daß** die zusätzlichen Mittel zum Aufnehmen und Transportiercn des Schwadenmaterials in dem Rahmen (1) eine geneigte Fördereinrichtung (12b) umfassen, die über der geneigten Fördereinrichtung (12a) angeordnet ist.

3. Maschine zum Wenden von Schwaden nach Anspruch 1, **dadurch gekennzeichnet, daß** die zusätzlichen Mittel zum Aufnehmen und Transportieren des Schwadenmaterials eine Entwirrschraube (40) umfassen, die im Rahmen über der geneigten Fördereinrichtung (12) angeordnet ist.

## Claims

1. Machine for turning heaps, particularly of manure, comprising a framework (1), provided with wheels (4) or with tracks, on which means for withdrawing material from the heap and transferring this material from the front towards the rear of the machine are mounted, arranged transverse the direction of working travel of the machine, the withdrawing and transfer means comprising an oblique conveyor (12; 12a) provided with at least one endless element (14) equipped with pins (15) for withdrawing and carrying along material from the heap, the said conveyor being inclined downwards in the direction of working travel of the machine and the machine further comprising means (30, 32, 34, 36) for driving the said at least one oblique conveyor, **characterized in that** it further comprises additional means (12b; 40) for withdrawing and transferring material from the heap, which additional means are disposed above the said oblique conveyor (12; 12a).

2. Machine for turning heaps according to Claim 1, **characterized in that** the additional means for withdrawing and transferring material from the heap comprise, in the framework (1), an oblique conveyor (12b) superposed relative to the oblique conveyor (12a).

3. A machine for turning heaps according to Claim 1, **characterized in that** the additional means for withdrawing and transferring material from the heap comprise a disentangling screw (40) disposed in the framework, above the oblique conveyor (12).
